# EUROPÄISCHE PATENTANMELDUNG

(11) **EP 0 936 479 A1**
(43) Veröffentlichungstag der Anmeldung: **18.08.1999**
(21) Anmeldenummer: 98102682.6
(22) Anmeldetag: 17.02.1998
(51) Int. Cl.: G02B 6/00, F16L 55/165, H02G 1/08, G02B 6/44

(54) **Bride mit Spannverschluss**

(71) Anmelder: KA-TE System AG, CH-8041 Zürich (CH); Hecht, Reinhard, 93047 Regensburg (DE); Manstorfer, Karl, 93047 Regensburg (DE)
(72) Erfinder: Lehmann, Peter, CH-3172 Niederwangen (CH); Maag, Heinz, CH-3172 Niederwangen (CH); Wyder, Hans, CH-8617 Mönchaltorf (CH); Hecht, Reinhard, D-93047 Regensburg (DE); Manstorfer, Karl, D-93047 Regensburg (DE); Bunschi, Hans Dr.sc.tech., CH-8041 Zürich (CH); Weingarten, Marco, CH-8041 Zürich (CH)
(74) Vertreter: Patentanwälte Schaad, Balass, Menzl & Partner AG

(57) **Zusammenfassung**

Bride (10) mit einem ring- bzw. spiralförmig gebogenen Bridenband (16) und einem Spannverschluss (20), die als Innenbride (10') vorteilhaft verwendet werden kann für das Verlegen von langgestreckten Gegenständen, wie z.B. von Kabeln oder Rohren, in Rohrleitungssystemen und insbesondere von nichtbegehbaren Rohren (12).

Für die Aufnahme der langgestreckten Gegenstände sind an der Bride Halter (18) vorgesehen, die bei einer Innenbride (10') radial nach innen vom Bridenband (16) abstehen. Der Spannverschluss (20) weist ein Rastelement, z.B. in Form eines Rastbolzens (24), auf, der durch eine Rastschablone (22) in Raststellung gehalten wird. Wird der Rastbolzen ausgerastet, so entspannt sich der Spannverschluss (20) teilweise und überträgt seine Spannkraft auf das Bridenband (16), wodurch die Bride (10/10') gespannt wird.

## Beschreibung

Die Erfindung betrifft eine Bride mit einem Spannverschluss gemäss Anspruch 1.

Briden gibt es in verschiedenen Ausführungsformen, z.B. als Innen- oder als Aussenbriden, mit oder ohne spezielle Haltemittel für zu bündelnde oder zu verlegende, langgestreckte Gegenstände, wie Kabel, Rohre, Schläuche o.ä.. Gemeinsam ist den Briden, dass die Kraft zum Spannen der Bride von aussen, z.B. durch Drehen von Schrauben oder durch Umlegen eines Spannhebels, in das System eingebracht werden muss. Gerade an unzugänglichen Stellen, wenn zudem grössere Kräfte zum Spannen erforderlich sind, ist dies oft ein Problem.

Aufgabe der vorliegenden Erfindung ist es daher, eine Bride zu Verfügung zu stellen, die problemlos montiert und einfach gespannt werden kann.

Diese Aufgabe wird gelöst durch eine Bride mit einem zu einem Ring bzw. zu einer Spirale gebogenen Bridenband, das einen Befestigungsabschnitt aufweist, an dem ein Spannverschluss befestigt ist. Das Bridenband wird ringförmig zum Spannverschluss zurück und durch einen im oder am Spannverschluss angeordneten Freilauf hindurchgeführt. Ein Blockierelement im Freilauf, in Form von Blockierzähnen oder einem Blockierarm, wirkt mit einem Blockierabschnitt des Bridenbandes so zusammen, dass das Bridenband entgegen seiner Spannrichtung wegrutschen kann. Das Blockierelement des Freilaufs ist mit einer im Spannverschluss vorgesehenen Feder gekoppelt. Die Feder ist einerseits bezüglich des Bridenbandes fest abgestützt andererseits an einem lösbaren Rastelement, das sie in Raststellung gespannt hält. Wird das Rastelement aus seiner Raststellung ausgerastet, entspannt sich die Feder und die Spannkraft wird über das mit der Feder gekoppelte Blockierelement im Freilauf auf das Bridenband übertragen. Die Bride wird dadurch gespannt.

Die nötige Energie, um die Bride zu spannen, ist also bereits in der Bride gespeichert, und zwar derart, dass sie leicht freigesetzt werden kann und die Bride sich infolgedessen selbst in den gespannten Zustand versetzt.

Eine solche erfindungsgemässe Bride kann als Innen- oder als Aussenbride verwendet werden. Entsprechend wird das Bridenband einer Aussenbride beim Ausrasten des Rastelementes unter Zugspannung und dasjenige einer Innenbride unter Druckspannung gesetzt. Vor der Montage ist das Bridenband einer Innenbride spiralförmig aufgewickelt und wird dann in etwa zu einer Ringform aufgeweitet, während das Bridenband einer Aussenbride vor der Montage eher ringförmig ist und dann unter Zugspannung verengt und gegebenenfalls spiralförmig aufgewickelt wird.

Besonders geeignet ist die erfindungsgemässe Bride, wie in Anspruch 8 beschrieben, als Innenbride, da das Bridenband, das für einen solchen Fall mit einer entsprechenden Knicksteifigkeit gewählt wird, sehr einfach unter Druckspannung gesetzt werden kann.

Eine solche Innenbride ist, gemäss Anspruch 11, hervorragend für das Verlegen von langgestreckten Gegenständen, wie z.B. von Kabeln oder Rohren, in Rohrleitungssystemen geeignet. Dabei erweist sich nicht nur die einfache Möglichkeit die Bride zu spannen als Vorteil, ein weiterer Vorteil für die Verwendung als Innenbride in einem Rohr ist der verstellbare Radius des ring- bzw. spiralförmig gebogenen Bridenbandes.

Die Bride wird mit spiralförmig aufgewickeltem Bridenband, dessen Radius kleiner ist als der Innenradius des Rohres, in das Rohr eingebracht. An der Stelle im Rohr, an der Kabel oder Schläuche o.ä. mittels der Bride im Rohr fixiert werden sollen, wird die Bride aufgeweitet bis das Bridenband an der Rohrinnenwand anliegt.

Schliesslich wird das Rastelement des Spannverschlusses gelöst und das Bridenband durch die Federkraft unter Druckspannung gesetzt. Dadurch wird die Bride mit solcher Kraft gegen die Rohrinnenwand gepresst, dass sie auch durch stark strömende Medien im Rohr nicht aus ihrer Position gebracht wird.

Eine solche, für das Verlegen von langgestreckten Gegenständen in Rohren verwendete Innenbride weist vorzugsweise Halter, gemäss den Ansprüchen 6 oder 7, auf, wobei die Halteelemente der Halter insbesondere radial nach innen vom Bridenband abstehen. Eine Vorrichtung, mit der man vorteilhaft langgestreckte Gegenstände in die Halter einer solchen in einem Rohr verwendeten Innenbride einsetzen kann ist in der CH-Patentanmeldung " Vorrichtung zum Einsetzen von Langgestreckten Gegenständen in Klammern" (Vertreterzeichen: A 12318 CH) beschrieben.

Für die Montage in nichtbegehbaren Rohren können die erfindungsgemässen Briden auch mit Hilfe eines Roboters im Rohr montiert werden. Dazu können die Briden mit Hilfselementen gemäss den Ansprüchen 9 und 10 ausgerüstet werden, welche die Montage mit Hilfe des Roboters erleichtern. Beispielsweise kann das Bridenband einen Zugriffsabschnitt mit Eingreiföffnungen aufweisen, in welche dann Greifer eines Roboters hineingreifen können, um z.B. die Bride kontrolliert aufzuweiten. In der CH-Patentanmeldung " Vorrichtung zum Montieren einer Innenbride in einem nichtbegehbaren Rohr" (Vertreterzeichen: A 12319 CH) ist ein geeigneter Roboter für eine solche Montage einer erfindungsgemässen Bride beschrieben.

Weitere bevorzugte Ausführungsformen sind Gegenstand der weiteren abhängigen Ansprüche.

Anhand der Figuren 1 bis 6 wird im Folgenden die Erfindung an einem Beispiel erläutert. Es zeigen rein schematisch:
- Fig. 1: einen Rohrquerschnitt mit einer mit Hilfe eines Roboters in dem Rohr montierbaren Innenbride mit einem spiralförmig aufgewickeltem Bridenband vor der Montage;
- Fig. 2: den Rohrquerschnitt und die Innenbride aus Fig. 1, wobei das Bridenband so aufgeweitet ist, dass es an der Rohrinnenwand anliegt;
- Fig. 3a: einen Spannverschlusses mit Rastbolzen und Rastschablone, wie er in den Fig. 1 und 2 gezeigt ist, mit gespannter Feder in einem Schnitt in Längsrichtung;
- Fig. 3b: den Spannverschluss aus Fig. 3a mit Blick auf die erste, die Rastschablone aufweisende Stirnseite;
- Fig. 4a: den Spannverschluss aus Fig. 3a in analoger Darstellung mit verschobener Rastschablone, entriegeltem Rastbolzen und teilweise entspannter Feder;
- Fig. 4b: den Spannverschluss aus Fig. 4a in analoger Darstellung zur Darstellung in Fig. 3b;
- Fig. 5a: einen Spannverschluss mit einem Drehbolzen als Rastelement und gespannter Feder in einem Schnitt in Längsrichtung;
- Fig. 5b: den Spannverschluss aus Fig. 5a in analoger Darstellung zu den Fig. 3b und 4b;
- Fig. 6: ein Bridenband einer mit Hilfe eines Roboters in einem Rohr montierbaren Innenbride;
- Fig. 7a: einen am Bridenband befestigbaren Halter für die Aufnahme von langgestreckten Gegenständen mit Blick quer zum Bridenband;
- Fig.7b: den Halter aus Fig. 7a mit Blick in Richtung des Bridenbandes.

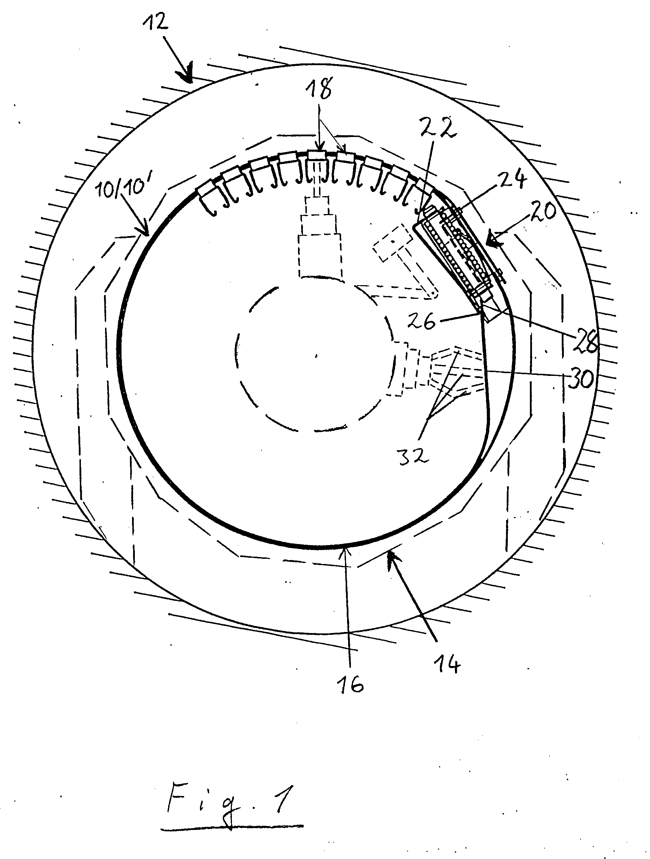

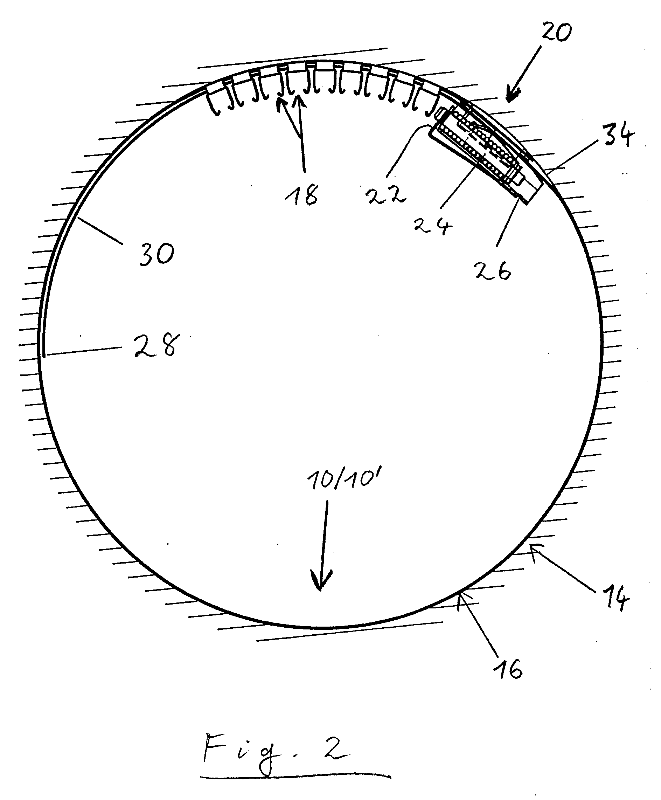

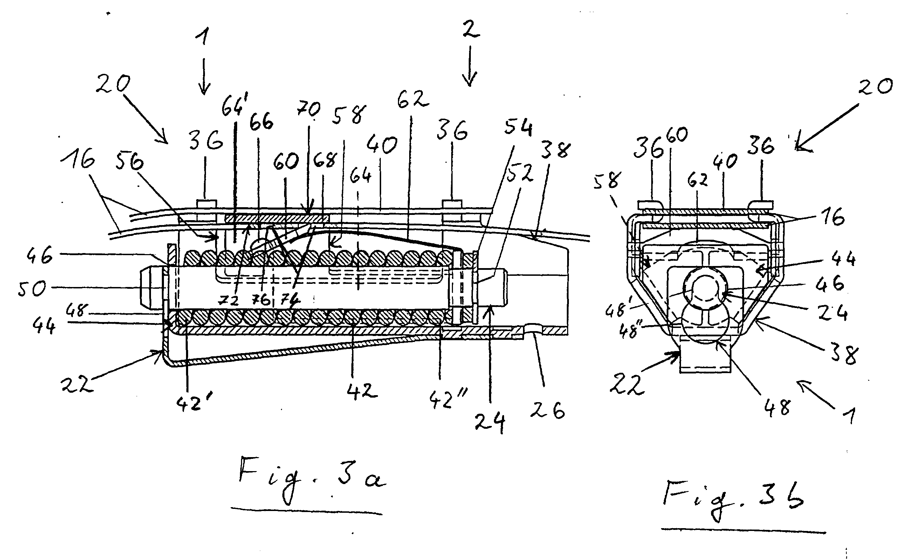

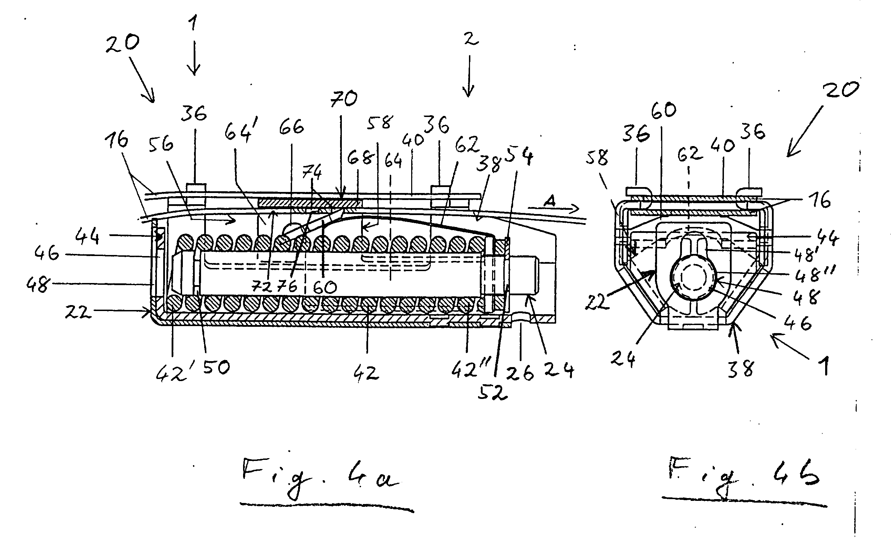

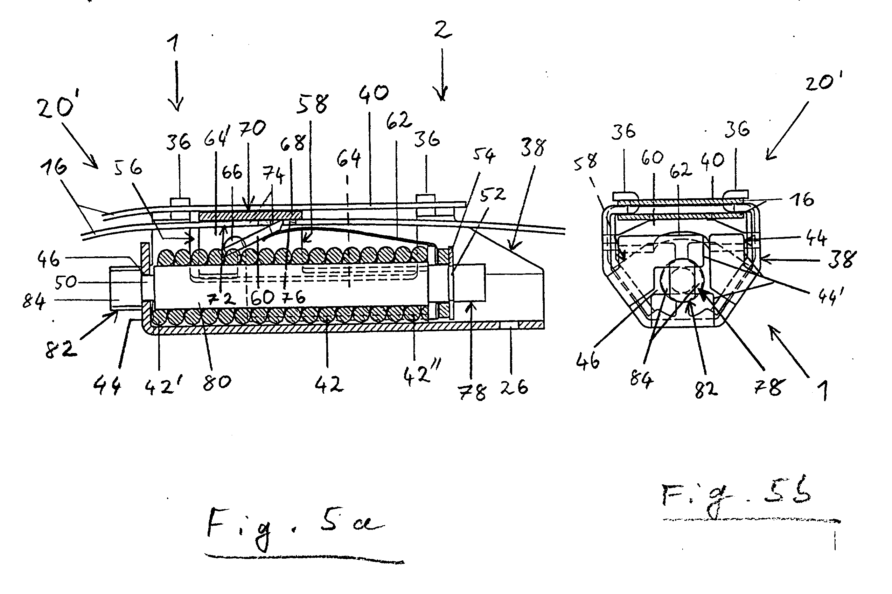

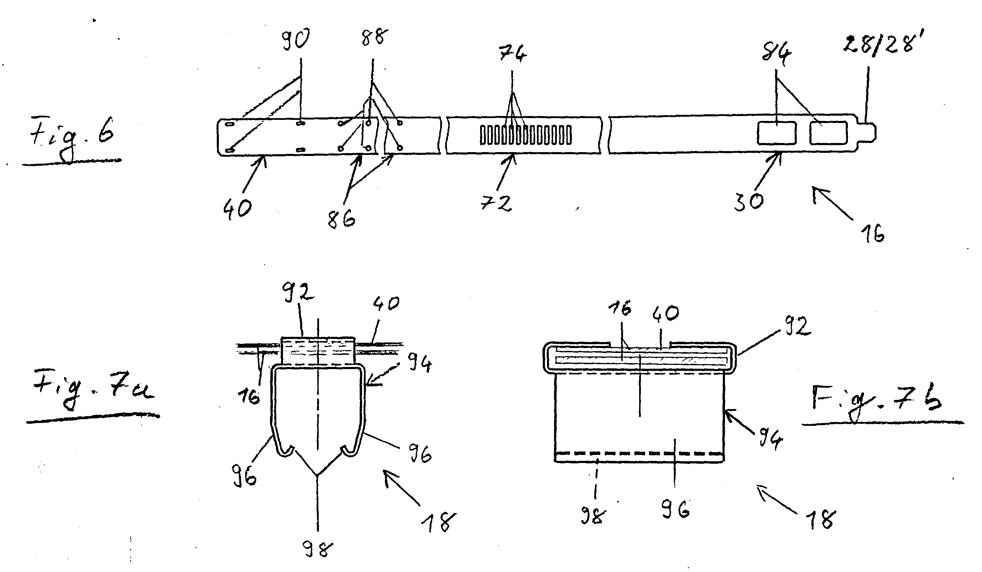

Fig. 1 zeigt als Beispiel für eine erfindungsgemässe Bride 10 eine in einem Rohr 12 mit Hilfe eines Roboters 14 montierbare Innenbride 10'. Der Roboter 14 ist in Fig. 1 nur durch gestrichelte Linien angedeutet. Die Innenbride 10' ist in ihrem Zustand vor der Montage im Rohr 12 gezeigt und weist ein spiralförmig aufgewickeltes Bridenband 16 auf, dessen Radius geringer ist als der Innenradius des Rohres 12. Für die Aufnahme von langgestreckten Gegenständen, wie z.B. von Rohren oder Kabeln, sind Halter 18 am Bridenband 16 befestigt. In dem in Fig. 1 gezeigten Beispiel ist als Spannverschluss ein Spannverschluss 20 mit einem durch eine Rastschablone 22 verriegelten Rastbolzen 24 in gespanntem Zustand gezeigt. Der Spannverschluss 20 weist eine Einführöffnung 26 zum einführen des innenliegenden Endes 28 des spiralförmig gebogenen Bridenbandes 16 auf. Diesem Ende 28 benachbart ist ein Zugriffsabschnitt 30 des Bridenbandes angeordnet, der durch das Einführen des Endes 28 in die Einführöffnung 26 des Spannverschlusses 20 von der benachbarten Windung des Bridenbandes 16 beabstandet ist, und so leicht von Robotergreifern 32 (durch gestrichelte Linien angedeutet) ergriffen werden kann.

In Fig. 2 ist die in Fig. 1 dargestellte Innenbride 10' in aufgeweitetem Zustand mit immer noch gespanntem Spannverschluss 20 dargestellt. Das vormals spiralförmig aufgewickelte Bridenband 16 ist nur noch in einem Abschnitt entlang des Rohres 12 doppelt geführt und liegt nun, eher eine Ringform als eine Spirale bildend, eng an der Rohrinnenwand 34 an. Das innenliegende Ende 28 des Bridenbandes 16 befindet sich nicht mehr in der Einführöffnung 26 des Spannverschlusses 20 und der diesem Ende benachbarte, von den Robotergreifern freigegebene Zugriffsabschnitt 30 des Bridenbandes 16 ist daher nicht mehr von der benachbarten Windung des Bridenbandes 16 beabstandet.

Die Fig. 3a und 3b zeigen den in den Fig. 1 und 2 dargestellten gespannten Spannverschluss 20 mit Rastschablone 22 und Rastbolzen 24 detaillierter. Der Spannverschluss 20 ist über Befestigungselemente 36 seines langgestreckten Gehäuses 38 am Befestigungsabschnitt 40 des Bridenbandes 16 befestigt und weist ein erstes Ende 1 und ein zweites Ende 2 auf. Eine als Schraubenfeder 42 ausgebildete und als Druckfeder wirkende Feder des Spannverschlusses 20, durch die der Rastbolzen 24 hindurchgeführt ist, wird vom Gehäuse 38 auf den Längsseiten wannenförmig umschlossen. Das erste Ende 42' der Feder 42 ist am ersten Ende 1 des Spannverschlusses 20 an einer Stirnwand 44 des Gehäuses 38 abgestützt, die eine Durchführöffnung 46 für den Rastbolzen 24 aufweist. Am zweiten Ende 2 des Spannverschlusses 20 ist das Gehäuse 38 offen. An diesem Ende 2 des Spannverschlusses 20 ist auf der dem Bridenband 16 gegenüberliegenden Längsseite die Einführöffnung 26 angeordnet.

Die Rastschablone 22 des Spannverschlusses 20 ist ebenfalls an der dem Bridenband 16 gegenüberliegenden Längsseite des Gehäuses 38 befestigt und ist beispielsweise aus einem Blech aus Federstahl geformt. Die Rastschablone 22 ist so ausgebildet, dass der Teil der Rastschablone 22, der eine schlüssellochförmige Schablonenöffnung 48 mit einem schmaleren Öffnungsteil 48' und einem weiteren Öffnungsteil 48'' aufweist, ausserhalb des Gehäuses 38 vor der Stirnwand 44 angeordnet und dort in Richtung auf das Bridenband 16 verschiebbar ist. Der gegen das erste Ende 1 des Spannverschlusses 20 ausgerichtete Teil des Rastbolzens 24 weist eine erste ringförmige Nut 50 mit gegenüber dem Bolzen 24 verringerten Durchmesser auf. In dem in den Fig. 3a und 3b gezeigten, gespannten Zustand des Spannverschlusses 20 ist der Rastbolzen 24 durch die Durchführöffnung 46 der Stirnwand 44 und durch die Schablonenöffnung 48 der Rastschablone 22 hindurchgeführt und die Begrenzung des schmaleren Öffnungsteils 48' der Schablonenöffnung 48 greift in die erste Nut 50 des Rastbolzens 24 ein, wodurch der Rastbolzen 24 bei gespannter Feder 42 verriegelt und in seiner Raststellung gehalten wird.

An der der Stirnwand 44 gegenüberliegenden Seite des Rastbolzens 24 ist in einer zweiten Nut 52 des Rastbolzens 24 eine Riegelplatte 54 fixiert, über die ein zweites Ende 42'' der Schraubenfeder 42 bezüglich des Rastbolzens 24 abgestützt ist. Die Riegelplatte 54 dient ausserdem der Fixierung weiterer zwischen ihr und der Schraubenfeder 42 auf den Rastbolzen 24 aufgesteckter Elemente, wie z.B. der Fixierung eines einen Freilauf 56 tragenden Schlittens 58 und einer einen Blockierarm 60 des Freilaufs 56 stützenden Blattfeder 62.

Der am Rastbolzen 24 fixierte Schlitten 58 weist zwei Seitenwände 64 auf, die sich aussen an der Schraubenfeder 42 vom zweiten Ende 2 des Spannverschlusses 20 gegen das erste Ende 1 des Spannverschlusses 20 erstrecken und gegen das erste Ende 1 hin gegen das Bridenband über die Feder 42 hinausragen. Die über die Feder 42 hinausragenden Teile 64' der Seitenwände 64 weisen Lageröffnungen 66 auf in denen der Blockierarm 60 des Freilaufs 56 drehbar gelagert ist. Die zwei über die Feder 42 hinausragenden Teile 64' der Seitenwände 64 sind durch eine Verbindungsplatte 68, die die Schraubenfeder quer zu ihrer Längsrichtung überspannt, miteinander verbunden. Die Verbindungsplatte 68 bildet zusammen mit den Teilen 64' der Seitenwände 64 des Schlittens 58 ein Führungselement 70 des Freilaufs 56. Der freilaufende Teil des Bridenbandes 16 ist durch dieses Führungselement 70 des Freilaufs 56 hindurchgeführt und wird durch selbiges im Bereich des Spannverschlusses 20 auf einem Mindestabstand zum Befestigungsabschnitt 40 des Bridenbandes 16 gehalten. Die ebenfalls am Rastbolzen 24 befestigte Blattfeder 62 erstreckt sich, die Feder 42 in Längsrichtung überspannend, von der der Stirnwand 44 gegenüberliegenden Seite des Rastbolzens 24 bis unter die Verbindungsplatte 68 des Freilaufs 56. Sie stütz den drehbar gelagerten Blockierarm 60 des Freilaufs 56 und drückt diesen federnd gegen das Bridenband 16, das zwischen Blockierarm 60 und Verbindungsplatte 68 hindurchläuft.

Der in den Fig. 3a und 3b dargestellte, im Freilauf 56 befindliche Bandabschnitt des Bridenbandes 16 ist ein Blockierabschnitt 72, der aufgrund von Blockierlöchern 74 Blockierflanken 76 aufweist, in die der Blockierarm 60 des Freilaufs 56 einrasten kann.

In den Fig. 4a und 4b ist der Spannverschluss 20 aus den Fig. 3a und 3b in teilweise entspanntem Zustand dargestellt. Die Rastschablone 22 ist in Richtung des Bridenbandes verschoben, so dass der weitere Öffnungsteil 48'' der Schablonenöffnung 48 auf die Höhe der Durchführöffnung 46 der Seitenwand 44 verschoben ist, wodurch der Rastbolzen 24 entriegelt und aufgrund der Federspannung in das Innere des Gehäuses 38 gerutscht ist. Die am Rastbolzen 24 fixierten Elemente, wie der den Freilauf 56 tragende Schlitten 58, an dem auch der Blockierarm 60 befestigt ist, und die den Blockierarm 60 stützende Blattfeder 62 sind mit dem Rastbolzen gegen das zweite Ende 2 des Spannverschlusses 20 verschoben. Der Blockierarm 60 greift in ein Blockierloch 74 des Blockierabschnittes 72 des Bridenbandes 16 ein und überträgt die über den Schlitten 58 auf den Blockierarm 60 weitergeleitete Kraft der Schraubenfeder 42 auf das Bridenband 16, das mit der entsprechende Federkraft unter Druckspannung (Pfeilrichtung A) gesetzt wird.

Mit dem in den Fig. 1 bis 4b dargestellten Spannverschluss 20 wird also das Bridenband 16, das bereits vor dem Entriegeln des Rastbolzens 24, wie in Fig. 2 gezeigt, an der Rohrinnenwand 34 anliegt, fest - mit der vor dem Einsatz der Bride 20 bestimmbaren Federkraft - gegen die Rohrinnenwand 34 gepresst und die Bride 20 so fest im Rohr 14 verankert.

In den Fig. 5a und 5b ist eine Spannverschluss 20' gezeigt, der prinzipiell gleich aufgebaut ist, wie der Spannverschluss 20, der in den Fig. 1 bis 4b dargestellt ist. Der Spannverschluss 20' unterscheidet sich nur dadurch von dem in den Fig. 1 bis 4b gezeigten Spannverschluss 20, dass er statt des mit der Rastschablone 22 zusammenwirkenden Rastbolzens 24 einen Drehbolzen 78 als Rastelement aufweist. Der Drehbolzen 78 ist auf dem der Stirnwand 44 zugewandten Ende wiederum mit einer ersten Nut 50 versehen, die zwischen Bolzenkörper 80 und Bolzenkopf 82 liegt und beide trennt. Der Bolzenkopf 82 weist auf zwei gegenüberliegenden Seiten Abfräsungen 84 auf, so dass er annähernd eine Balkenform einnimmt. Die Abfräsungen 84 sind so bemessen, dass der Bolzenkopf 82 bei einer definierten Stellung des Drehbolzens 78 durch die Durchführöffnung 46 der Stirnwand 44 hindurchpasst. Im gezeigten Beispiel wird die Stirnwand 44 aus drei Wandelementen 44' (Fig.5b) gebildet, die eine rechteckige Durchführöffnung 46 begrenzen, durch welche der Bolzenkopf 82 in waagrechter Stellung hindurchpasst. Wird der Bolzenkopf 82 durch die Durchführöffnung 46 aus dem Gehäuse 38 heraus gesteckt und in eine senkrechte Position gedreht, so greifen Teile der Wandelemente 44' der Stirnwand 44 in die Nut 50 hinter dem Bolzenkopf 82 und verhindern, dass der Drehbolzen 78 mit dem Bolzenkopf 82 durch die Durchgangsöffnung 46 der Stirnwand 44 ins Gehäuse 38 zurückrutscht.

In der in den Fig. 5a und 5b gezeigten Position des Drehbolzens mit ausserhalb des Gehäuses 38 befindlichem, senkrecht stehendem Bolzenkopf 82 ist die auf den Drehbolzen 78 aufgesteckte Schraubenfeder 42 und somit der Spannverschluss 20 gespannt. Wird der Drehbolzen 78 um 90° gedreht, rutscht der Bolzenkopf 82 durch die Durchführöffnung 46 der Stirnwand 44, die Feder 42 entspannt sich und überträgt, via Schlitten 58 und Blockierarm 60 ihre Federkraft auf den im Freilauf 56 befindliche Blockierabschnitt 72 des Bridenbandes 16 und somit auf das gesamte Bridenband 16 der Bride 20. Die Bride 20 wird gespannt.

Fig. 6 zeigt ein Bridenband 16 wie es beispielsweise für eine in den Fig. 1 und 2 dargestellte Innenbride 10' verwendet wird. Das Ende 28 des Bridenbandes 16 ist als Einführlasche 28' ausgeformt, die zum Einführen in die Einführöffnung 26 des Spannverschlusses 20/20' bestimmt ist. Der Einführlasche 28' benachbart ist der Zugriffsabschnitt 30 angeordnet, der in diesem Ausführungsbeispiel Eingreiföffnungen 84 für den Zugriff von Robotergreifern 34 aufweist. Der Blockierabschnitt 72 des Briedenbandes 16, dessen Position im Bridenband 16 entsprechend dem Innenumfang des Rohres 12 gewählt wird, ist mit Blockierlöchern 74 versehen, in die das Blockierelement im Freilauf 56 des Spannverschlusses 20 einrasten kann. Die in den Fig. 1 und 2 dargestellten Halter 18 werden an einem Halterabschnitt 86 des Bridenbandes 16 befestigt. Der Halterabschnitt 86 kann zu diesem Zweck Befestigungsmittel, z.B. in Form der hier gezeigten Befestigungslöcher 88, aufweisen. An dem dem Ende 28 gegenüberliegenden Ende des Bridenbandes 16 ist der Befestigungsabschnitt 40 des Bridenbandes 16 angeordnet, an dem der Spannverschluss 20 befestigt werden kann. Für eine einfachere Befestigung des Spannverschlusses 20 sind auch im Befestigungsabschnitt 40 Befestigungsöffnungen 90 vorgesehen, durch welche die Befestigungselemente 36 des Spannverschlusses 20 hindurchgreifen können, wie dies in den Fig. 3a bis 5b dargestellt ist. Es können aber auch Schrauben, Bolzen oder andere Befestigungsmittel hindurchgesteckt werden.

Die Fig. 7a und 7b zeigen den Halter 18, wie er in den Fig. 1 und 2 dargestellt ist, genauer. Mit einem Befestigungsglied 92, dass im gezeigten Ausführungsbeispiel C-förmig ausgebildet ist, wird der Halter 18 im Halterabschnitt 86 des Bridenbandes 16 so befestigt, dass das Halteelement 94 vom Halterabschnitt 86 beabstandet ist und ein weiterer Abschnitt des Bridenbandes 16 mit Spiel zwischen dem Halteelement 94 und dem Halterabschnitt 86 des Bridenbandes 16 hindurchgeführt werden kann. Das Halteelement 94 ist in Form von zwei Haltezungen 96 ausgestaltet, deren Enden 98 hakenförmig aufeinanderzu umgebogen sind. Die Haltezungen 96 sind federnd ausgebildet und umfassen die zu haltenden Gegenstände klippartig.

Neben den in den Figuren gezeigten und beschriebenen Ausführungsformen, sind auch andere Ausführungsformen der erfindungsgemässen Bride 10 vorstellbar.

So kann die Bride 10, wie bereits gesagt, auch als Aussenbride ausgestaltet sein und sie kann beispielsweise auch ohne Halter 18 eingesetzt werden. Als Rastelement kann statt eines Rastbolzens 24 oder eines Drehbolzens 78 z.B. auch eine Rastklammer, ein Rasthebel oder ähnliches vorgesehen sein. Auch das Blockierelement im Freilauf 56 muss nicht ein Blockierarm 60 sein. Das Blockierelement kann ebensogut die Form eines Dornes haben oder es können ein oder mehrere Blockierzähne vorgesehen sein. Auch die Position des Freilaufes 56 bezüglich der Feder 42 und des Gehäuses 38 des Spannverschlusses 20 sind nicht zwingend in der gezeigten Form. Die Federkraft der Feder 42 muss nur beim Ausrasten des Rastelementes via Freilauf auf das Bridenband übertragen werden.

Auch die Halter 18 können anders z.B. als Ösen ausgestaltet sein, durch welche die langgestreckten Gegenstände hindurchgefädelt werden. Die einzelnen Elemente wie Spannverschluss 20 und Halter 18 können mit Bolzen, Schrauben, Steckverbindungen am Bridenband 16 befestigt sein oder auch angeschweisst sein. Auch die Ausgestaltung der Blockierflanken 76 im Blockierabschnitt 72 des Bridenbandes 16 kann auf andere Weise geschehen als nur über Blockierlöcher 74, z.B. über eingearbeitete Absätze oder Mulden. Statt der Eingreiföffnungen 84 im Zugriffsabschnitt 30 des Bridenbandes 16 sind beispielsweise auch Haken oder ähnliches denkbar.

## Patentansprüche

1. Bride mit einem zu einem Ring bzw. zu einer Spirale gebogenen Bridenband (16), an dem an einem Befestigungsabschnitt (40) ein mit einer Feder (42) versehener Spannverschluss (20/20') befestigt ist und dessen Blockierabschnitt (72) zum Zusammenwirken mit einem Freilauf (56) des Spannverschlusses (20/20') bestimmt ist, wobei ein erstes Ende (42') der Feder (42) bezüglich des Befestigungsabschnittes (40) fest abgestützt ist und der Spannverschluss (20/20') ein lösbares Rastelement aufweist, das dazu bestimmt in Raststellung die Feder (42) in gespanntem Zustand zu halten, wobei ein mit dem Rastelement zusammenwirkendes zweites Ende (42'') der Feder (42) derart mit dem Freilauf (56) zusammenwirkt, dass beim Ausrasten des Rastelementes das Bridenband (16) im Freilauf (56) gegen die Spannrichtung des Bridenbandes (16) festgehalten und das Bridenband (16) durch die deblockierte Feder (42) unter Spannung gesetzt wird.

2. Bride nach Anspruch 1, dadurch gekennzeichnet, dass das Rastelement ein Drehbolzen (78) ist, der so ausgestaltet ist, dass er durch eine Drehung, vorzugsweise um 90°, zum Ausrasten gebracht wird.

3. Bride nach Anspruch 1, dadurch gekennzeichnet, dass das Rastelement ein Rastbolzen (24) ist, der durch eine Rastschablone (22) in seiner Raststellung haltbar ist, und die Schablone (22) derart ausgestaltet ist, dass ein Verschieben der Schablone (22) zum Ausrasten des Rastbolzens (24) führt.

4. Bride nach einem der Ansprüche 1 bis 3, dadurch gekennzeichnet, dass der Blockierabschnitt (72) mit Blockierflanken (76) versehen ist, an denen zum Blockieren des Briedenbandes (16) ein Blockierelement des Freilaufs (56), vorzugsweise in Form eines Blockierarms (60), angreifen kann.

5. Bride nach einem der Ansprüche 1 bis 4, dadurch gekennzeichnet, dass der Spannverschluss (20/20') ein Gehäuse (38) aufweist, über dessen Befestigungselemente (36) der Spannverschluss (20/20') am Befestigungsabschnitt (40) des Bridenbandes (16) befestigt ist und gegen dessen eine Stirnwand (44) das erste Ende (42') der Feder (42) fest abgestützt ist, wobei das zweiten Ende (42'') der Feder (42) mit einem den Freilauf (56) tragenden Schlitten (58) zusammenwirkt.

6. Bride nach einem der Ansprüche 1 bis 5, dadurch gekennzeichnet, dass sie einen über ein Befestigungsglied (92) am Bridenband (16) befestigten Halter (18) mit einem Halteelement (94) für die Aufnahme von langgestreckten Gegenständen, insbesondere von Kabeln oder Rohren, aufweist, wobei das Befestigungsglied (92) das Halteelement (94) derart vom mit dem Befestigungsglied verbundenen Bridenband (16) beabstandet hält, dass zwischen dem Halteelement (94) und dem fest mit dem Halter (18) verbundenen Bridenband (16) ein weiterer Abschnitt des Bridenbandes (16) hindurchgeführt werden kann.

7. Bride nach Anspruch 6, dadurch gekennzeichnet, dass das Halteelement (94) des Halters (18) klippartig mit zwei federnden Haltezungen (96) ausgestaltet ist und, dass vorzugsweise eine Vielzahl von Haltern (18) in festem Abstand hintereinander am Bridenband (16) angeordnet sind.

8. Bride nach einem der Ansprüche 1 bis 7, dadurch gekennzeichnet, dass sie eine Innenbride (10') ist und dass das Bridenband (16) durch entriegeln des Spannverschlusses (20/20') unter Druckspannung gesetzt wird, wobei die Knicksteifigkeit des Bridenbandes (16) so gewählt ist, dass es unter der aufgebrachten Druckspannung nicht knickt.

9. Bride nach Anspruch 8, dadurch gekennzeichnet, dass sie an einem Abschnitt des Bridenbandes (16), vorzugsweise an demjenigen mit den Haltern (18), von einem Roboter (14) gehalten werden kann und, dass das Bridenband (16) einen Zugriffsabschnitt (30) aufweist, der so, z.B. mit Eingreiföffnungen (84), ausgestaltet ist, dass Robotergreifer (32) den Abschnitt (30) ergreifen können, so dass die Bride (10/10') mit Hilfe eines Roboters (14) in einem Rohr (12) montiert werden kann.

10. Bride nach Anspruch 9, dadurch gekennzeichnet, dass der Zugriffsabschnitt (30) des Bridenbandes (16) einem innenliegenden Ende (28) des spiralförmig aufgewickelten Bridenbandes (16) benachbart ist, welches in Form einer Einführlasche (28') ausgestaltet ist, die vor der Montage in eine dafür vorgesehene Einführöffnung (26) des Spannverschlusses (20/20') eingeführt ist, wodurch der Zugriffsabschnitt (30) von der benachbarten Windung des Bridenbandes (16) beabstandet gehalten und der Zugriff auf den Zugriffsabschnitt (30) erleichtert wird.

11. Verwendung einer Bride gemäss den Ansprüchen 8 bis 10, zum Verlegen von langgestreckten Gegenständen, vorzugsweise von Kabeln und Rohren, in Rohrleitungsnetzen und insbesondere in nicht-begehbaren Rohren (12).
